# EUROPEAN PATENT SPECIFICATION

(11) **EP 0 504 422 B1**
(45) Date of publication and mention of the grant of the patent: **26.03.1997**
(21) Application number: 91917333.6
(22) Date of filing: 03.10.1991
(51) Int. Cl.: B01D 39/20, B01D 46/42, F01N 3/02

(54) **SELF-HEATING FILTER**
SELBSTHEIZENDES FILTER
FILTRE AUTOCHAUFFANT

(30) Priority: 05.10.1990 JP 268695/90
(43) Date of publication of application: 23.09.1992
(73) Proprietor: NIPPONDENSO CO., LTD., Kariya-city Aichi-pref., 448 (JP)
(72) Inventor: TAKEUCHI, Yukihisa, Kariya-city, Aichi-Pref. 448 (JP)
(74) Representative: Pellmann, Hans-Bernd, Dipl.-Ing.
(86) International application number: JP9101345
(87) International publication number: WO9205857

(56) References cited:
- EP-A- 0 275 372
- DE-A- 3 800 723
- JP-A- 2 043 915
- JP-A-63 224 711
- JP-B- 2 030 286
- JP-U-62 126 748

## Description

### BACKGROUND OF THE INVENTION

### (1) Field of the Invention

The present invention relates to a self-exothermic type filter in which the filter itself can be heated, and more particularly relates to a filter which collects particulates discharged from diesel engines or the like.

### (2) Description of the Related Arts

For example, Japanese Patent Application Laid Open No. 131518-1980 discloses a filter which collects particulates discharged from diesel engines and the like. According to the patent application, a regenerative heater comprising nichrome wires which regenerate the filter made of ceramics by burning particulates adhered to the filter, is provided in the upstream part of the filter.

However, in the filter structured in the manner described above, the following various problems are caused:
(1) It is necessary to provide a means to detect an amount of particulates accurately in the process of regeneration.
(2) When the filter is regenerated under the condition that the amount of particulates is small, the particulates are not burnt sufficiently, so that an excellent result of regeneration can not be obtained.
(3) When the filter is regenerated under the condition that the amount of particulates is large, the temperature of regeneration is raised too high. Accordingly, the ceramic filter is damaged.
(4) The regeneration heater is mounted only on the end portion of the ceramic filter. Accordingly, in the process of regeneration, the heater installed portion of the filter is heated to the highest temperature, and as the position far from the heater, the temperature becomes lower. Due to the aforementioned ununiformed temperature distribution, damage of the filter is caused.

Further, Japanese Patent Application Laid Open No. 18403-1986 discloses a porous metallic filter in which sintered metallic material is adhered to a wire mesh screen. In the official gazette disclosing the aforementioned porous metallic filter, the method to regenerate the filter is not described, and further the most appropriate application of the filter to collect particulates is not disclosed at all, so that there was problem when this metallic filter was used for collecting particulates.

As described above, a new filter for collecting particulates, the structure of which is different from conventional filters, has been required.

It is therefore an object of the present invention to provide an excellent self-exothermic type filter in which not only the particulate collecting efficiency is high, but also the strength of the filter is high and filter regeneration can be carried out excellently.

EP-A-0 275 372 discloses a filter for diesel engines which generally comprises a heating element for heating the filter. The heating element can be optionally embedded in the material of the filter body and both, the heating element and the filter body, are composed of different materials. According to a further embodiment, the heating and filtering functions are combined so that no seperate heating element is required.

### SUMMARY OF THE INVENTION

In order to accomplish the aforementioned object, the present invention presents a self-exothermic type filter comprising:
a support section formed from an electrically conductive metal member having a mesh portion, said mesh portion having a plurality of holes equally distributed thereon and having a constant thickness so that electrical conductivity remains constant; and a second layer covering said support section and being integral with said support section, being made from a porous sintered body obtained from metallic powder having the same composition as said support section so that said second layer and said support section generate heat by themselves when electricity is applied to said support section and said second layer.

According to the means described above, the second layer made of a porous sintered body (in the following referred to 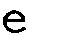 porous second layer") covers said support section and is integral with said support section, so that the strength of the porous second layer can be improved. Further, by electrical heating the support, the particulates collected by the mesh portion and the porous second layer are heated not only by the support portion but also the said second layer. Accordingly, the collected particulates collected by the mesh portion and the porous second layer can be burned.

### BRIEF DESCRIPTION OF THE DRAWINGS

Fig. 1 is a general drawing of a diesel engine particulate collecting apparatus of the first embodiment of the present invention;
Fig. 2 is a sectional view showing the section of the filter of the first embodiment;
Fig. 3 is a sectional view showing the section of the filter of the first embodiment;
Figs. 4(a) and (b) are respectively a view of the upstream side end surface and a view of the downstream side end surface of the filter;
Figs. 5(a) and (b) are respectively a perspective view of a filter member and a sectional view taken on line A-A of the filter member of the first embodiment;
Figs. 6(a) and (b) are respectively a partially enlarged view of a holding section on the downstream side of the filter member and a partially enlarged view of a holding section on the upstream side of the filter member;
Fig. 7 is a typical view showing a configuration of a expanded metal member which is the support section;
Fig. 8 is a partially enlarged sectional view of a filter section of a filter member;
Fig. 9 is a schematic view explaining the dimensions of the expanded metal member;
Fig. 10 is a characteristic diagram of the filter of the first embodiment;
Fig. 11 is a characteristic diagram showing a relation between the collection efficiency and the average diameter formed in a sintered metal;
Fig. 12 is a general view showing the entire structure of a diesel engine particulate collecting apparatus of the second embodiment;
Figs. 13(a) and (b) are respectively perspective and sectional views showing the structure of a filter member of the third embodiment;
Fig. 14 is a schematic view showing another embodiment of the filter of the present invention; and
Fig. 15 is a sectional view showing another embodiment of an upstream side fixing portion of a filter member.

### DESCRIPTION OF THE PREFERRED EMBODIMENTS

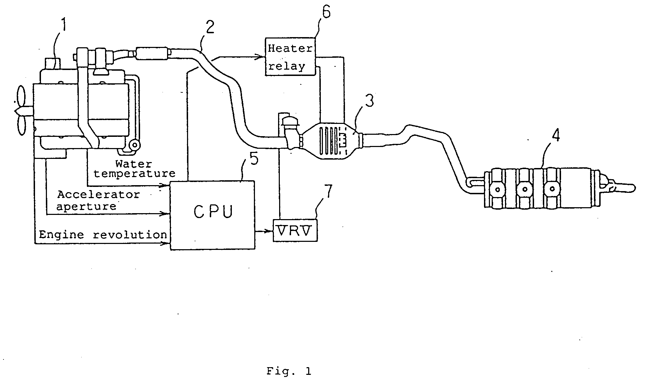

Fig. 1 is a general view showing the entire structure of a diesel particulate collecting apparatus to which the self-exothermic type filter of the first embodiment is applied.

Numeral 1 is a diesel engine. A self-exothermic type filter 3 of the present invention is connected with the diesel engine 1 through an exhaust pipe 2 provided on the exhaust side of the engine. Further, a muffler 4 is provided on the downstream side of the filter 3.

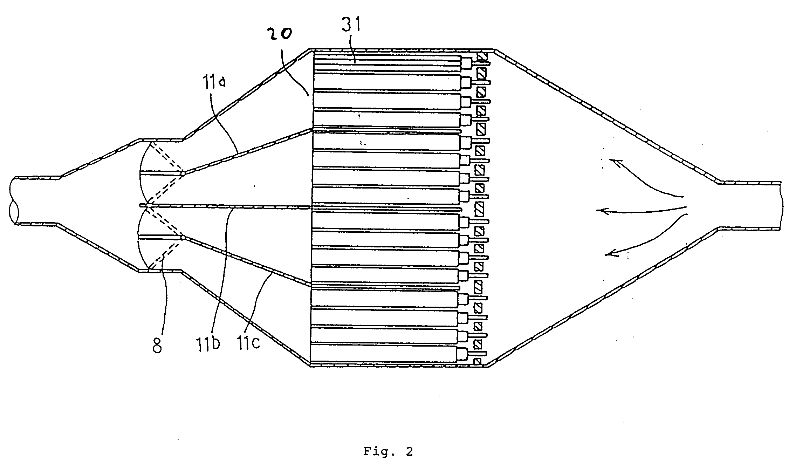

A CPU 5 is provided, which determines the regeneration time of the filter by detecting the signal from the water temperature of the engine, the engine speed and the aperture of an accelerator through a heater relay 6. Further, CPU 5 controls a valve 8 (shown in fig. 2) provided on the downstream side of the filter and adjusts an amount of air through a vacuum regulating valve (VRV) 7.

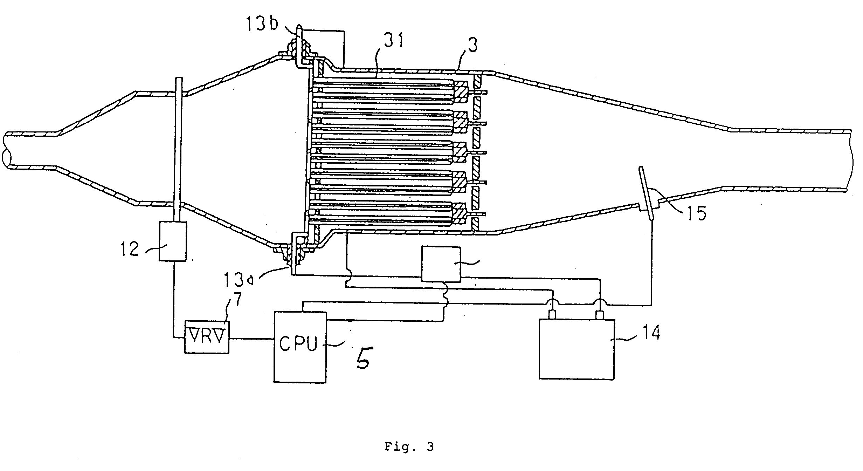

Fig. 2 is an upper sectional view of the filter 3 of the first embodiment, and Fig. 3 is a side sectional view of the same.

As shown in Figs. 2 and 3, a part on the downstream side of the filter 3 is divided into 4 passages by bulkheads 11a, 11b and 11c. In each of the passages, U-shaped filter members 31 are disposed in such a manner that 4 lines of them are disposed longitudinally and 10 lines of them are disposed laterally so that 40 filter members are disposed in total to form an assembled body 20 a shown in fig. 2. A pair of the assembled bodies 20 compose the filter 3 as shown in fig. 2.

When the filter 3 is regenerated, in order to make an amount of exhaust gas constant by the speed engine of 1, the load and the signal sent from the exhaust gas temperature detector 15, an amount of exhaust gas in each passage is controlled with the valve 8 (shown in fig. 2) through a vacuum regulating valve 7 and a motor 12 in accordance with a signal sent from CPU 5.

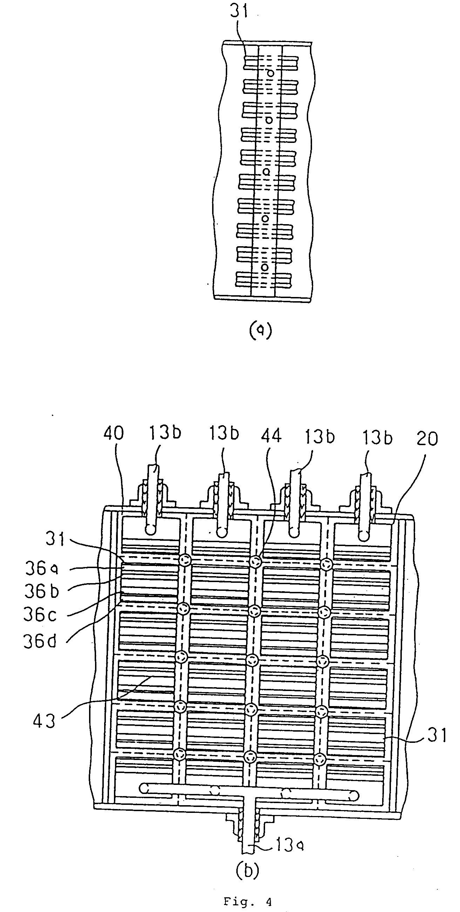

In Figs. 4(a) and (b), a part of upstream side end surface of the assembled body 20 and a downstream side end surface of the same are shown.

As clearly shown in Figs. 4(a) and (b), the assembled body 20 is structured in such a manner that the filter members 31 are electrically connected in series to each other with the electrode members 13a, 13b, and a voltage is impressed by the electrode members 13a, 13b from a battery 14.

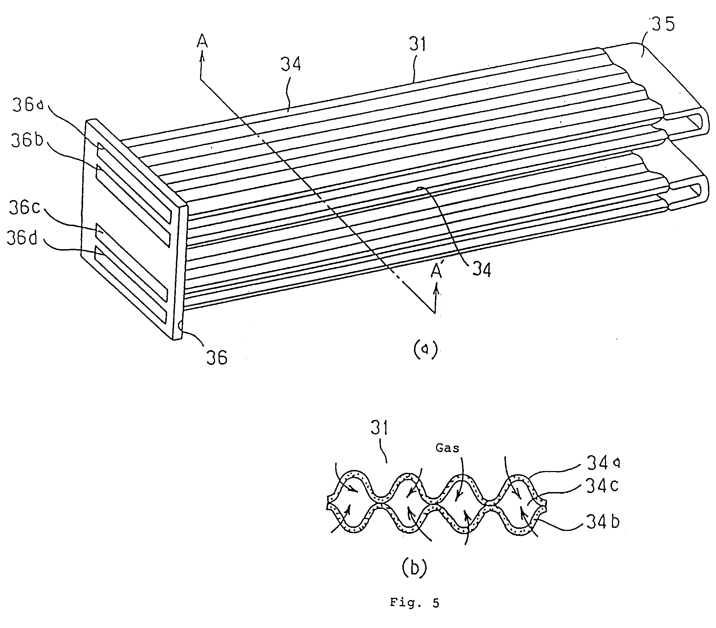

Fig. 5(a) is a perspective view of the filter member 31 of the present invention, and Fig. 5(b) is a partial sectional view of the filter member 31.

The filter member 31 comprises by a filtering section 34 having filtering function, a connecting section 35 which connects 2 filtering sections 34, and a holding section 36 which simultaneously holds 2 sets of filtering sections 34 connected by the connecting section 35.

The length of the filtering section 34 is 130 mm, the width is 13 mm, the thickness is 2.5 mm, and the wall thickness of the filter is 0.2 to 0.3 mm. In this filtering section 34, a support section (32) having a mesh portion holds a porous second layer 33 made from a sintered body which is made of Fe-Cr-Al-REM and the porous second layer 33 is a sintered alloy whose Al content is not less than 5 wt%. In the porous second layer 33, fine holes are formed with the three-dimensional mesh structure, so that particulates can be sufficiently collected by the filter members. As shown in the sectional view of Fig. 5(b) taken on line A-A, in the filtering section 34, opposed 2 filter members 34a, 34b are composed wave form in parallel with respect to the longitudinal direction (the direction of exhaust gas flow) each other. Therefore, exhaust gas can flow into a hollow portion 34c which is inside the filtering section 34 from the outside. Further, to the upstream side end portion of the filtering section 34, C-shaped connecting member 35 made of Fe-Cr-Al-REM and Al content of which is not less than 10 wt%, is welded, and this C-shaped member is also connected with the upstream-side end portion of another filtering section, so that 2 filtering sections are provided so as they are opposed to each other.

Further, in the downstream-side end portion of the filtering section 34, so as the hollow portion 34c of the filtering section 34 to be directly connected to it, the holding section 36 is provided with discharge sections 36a, 36b, 36c and 36d, and they are fixed with the filtering section 34 by welding.

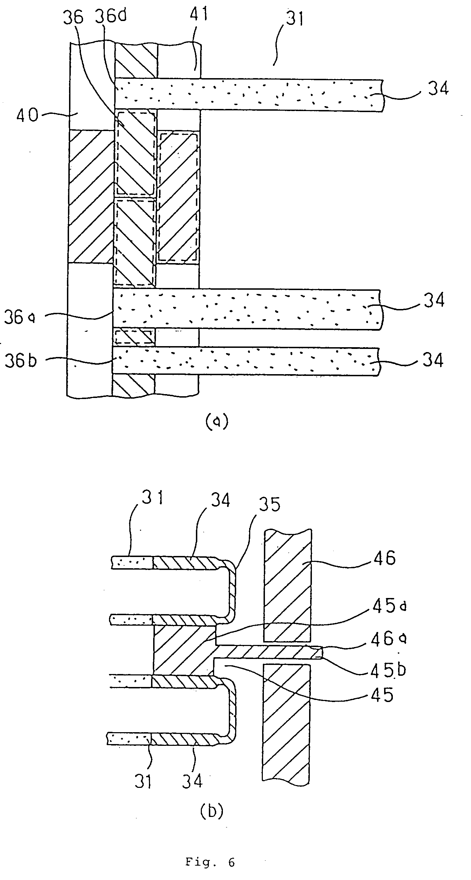

Next, referring to Figs. 6(a) and (b), the holding structure of the filter member 31 will be explained as follows.

Fig. 6(a) is a partially enlarged view showing the downstream-side end portion of the filter member 31, and Fig. 6(b) is a partially enlarged view showing the holding structure of the upstream-side end portion of the filter member 31.

In the downstream-side end portion of the filter member 31, the holding section 36 of the filter member 31 is held between a downstream-side rear fixing member 40 and a downstream-side front fixing member 41, so that the filter member 31 is fixed to the fixing members 40, 41, and the assembled body 20 having 40 filter members is formed. As shown in Fig. 4(b), this downstream-side rear fixing member 40 is formed lattice-shaped, and the discharge sections 36a, 36b, 36c and 36e of the filter member 31 are exposed to a plurality of lattice spaces 43.

The downstream-side rear fixing member 40 and the downstream-side front fixing member 41 are made of an alloy of Fe-Cr-Al-REM in which the Cr content is 18 to 24 wt%, the Al content is not less than 15 wt%, REM is not less than 0.2%, and the rest is Fe. This alloy is oxidized in the atmosphere at a temperature not lower than 900°C for 0.5 to 20 hours and an insulating layer comprised Al oxide is formed on the surface.

Concerning the filter member 31 which is located in the upper and lower ends in Fig. 4(b) and is connected with the electrode members 13a, 13b, only the filtering section 34 is provided on one side of the holding section 43, and to the holding section 36 on the other side being formed filtering section 34 is electrically connected with the electrode members 13a, 13b so that electric power can be supplied to the filtering section 34.

By fixing filter member to the downstream-side rear fixing member and the downstream-side front fixing member, the holding section 36 of mutual filter members 31 is electrically connected such that the holding section 36 is pinched by the electrode members 13a, 13b, so that the electrode member 13a is electrically communicated with the electrode member 13b through the filtering section 34 of the filter member 31.

In the first embodiment, in order to positively fix the filter members to each other, the downstream-side rear fixing member 40 and the downstream-side front fixing member 41 are fixed to each other with rivets 44.

As shown in Fig. 6(b), in the upstream-side end portion of the filter member 31, the filter members 31 are connected with each other by the U-shaped connecting section 35 which is electrically conductive. A spacing portion 45a of a spacer 45 is welded between the filtering sections 34 opposed to each other, and the connecting sections 35 are electrically communicated with each other through the spacing portion 45a of the spacer 45.

Further, this spacer 45 is formed with a lead portion 45b, the diameter of which is thinner than that of the spacing portion 45a. By being movably penetrated this lead portion 45b through a hole 46a provided an upstream-side fixing section 46, the upstream-side end portion of the filter member 31 is fixed to an upstream-side fixing section 46. This upstream-side fixing section 46 is also made of the same material as that of the first fixing section.

A method for producing the filtering section of the filter member 31 will be explained as follows.

First, the support section 32 (a metallic member having mesh which is a plurality of holes made by expanding a plate while cutting) which serves as a support member of the filter member 31, is formed to a parallel wave-shape in the longitudinal direction by subjecting press and the like. The formed support section 32 is put upon another so that a cylindrical shape having the hollow portion 34c is formed.

One end of the cylindrical support section 32 made as cylindrical shape is welded to the holding section 36, and the other end is welded to the connecting section 35 so that it can be electrically communicated.

Further, a slurry comprised by: 100 weight parts of metallic powder composed of Fe-Cr-Al-REM, wherein the Al content is not less than 5 wt%, the Cr content is 18 to 24 wt%, REM is not more than 0.2 wt%, the rest is Fe, and the average particle size is about 45 µm; 0.5 to 5 weight parts of binder made of, for example, methyl cellulose; and 50 to 200 weight parts of water; is made. The support section 32 is dipped in the slurry so that the slurry is deposited on the mesh portion of the support section 32.

After that, the support portion 32 is sufficiently dried, and then it is burned in the vacuum lower than 133 × 10⁻³ Pa (10⁻³ torr) at a temperature of 1000 to 1300°C for 1 to 20 hours so that the metallic powder can be sintered to obtain the sintered metal which forms said porous second layer 33. In this manner, the sintered metal which forms said porous second layer 33 is fixed to the mesh portion of the support section 32.

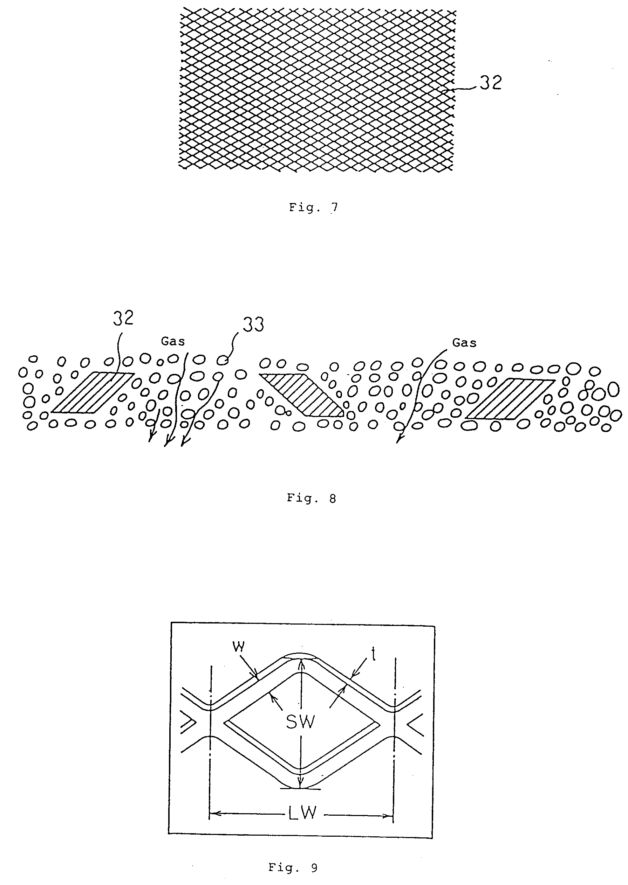

Fig. 8 shows a partially enlarged sectional view of the filtering section 34 of the filter member 31. As shown in Fig. 8, the mesh portions of the support section 32 are filled with the sintered metal which forms said porous second layer 33, and the sintered metal is joined with each other, so that a fine three-dimensional mesh structure is constructed.

Onto the surface of the filtering section 34 provided in the aforementioned manner, r-Al₂O₃ and catalyst are adhered to obtain the filter member 31.

Fig. 9 is an enlarged view of the mesh portion of the support section 32, the dimensions of which are shown in the view. In this case the support section 32 is formed from an expanded metal member.

A support section 32 having the following dimensions is preferably used for the filter member 31: the thickness t is 0.05 to 0.5 mm, the longitudinal length SW of the mesh is 0.5 to 1.5 mm, the lateral length LW of the mesh is 1.0 to 5.0 mm, and the thickness W of the metal member having a rectangular cross section is 0.08 to 0.7 mm. In the case where the thickness is smaller than 0.05, the strength of the obtained filter member 31 is weak so that it can not be put into practical use. In the case where the thickness t is larger than 0.5 mm, a sufficient strength can be positively provided, however, the thermal capacity is increased too high, so that the filter can not be sufficiently heated in the process of regeneration. In the case where longitudinal length SW of the mesh is shorter than 0.5 mm, it is difficult to produce the support section 32, and in the case where longitudinal length SW of the mesh is longer than 1.5 mm, the sintered metal forming said second layer 33 provided in the spaces of the mesh portion, is easily separated. In the case where lateral length LW of the mesh is shorter than 1.0 mm, it is also difficult to make the support section 32, and in the case where lateral length LW of the mesh is longer than 5.0 mm, the sintered metal forming said second layer 33 is separated from the support section. Further, in the case where wire thickness W is smaller than 0.08 mm, the strength of the obtained filter member 31 is lowered, and in the case where thickness W is larger than 0.7 mm, pressure loss of the filter member 31 is increased.

Next, function of the filter 3 of the first embodiment will be described as follows.

When the exhaust gas including particulates discharged from the diesel engine 1 passes through the filter 3, the particulates are collected, and the obtained clean exhaust gas which does not include particulates, is discharged into the atmosphere through the muffler 4.

When exhaust gas passes through the filtering section 34 from the outer circumference of the filtering section 34 of the filter member 31 and reaches the hollow portion 34c as shown by arrow marks in Fig. 5(b), particulates in the exhaust gas can be filtered.

After that, the exhaust gas passes through a discharge section 36a of the holding section 36, and reaches the downstream section of the filter 3.

However, while the particulates are successively collected by the filter 3, the pressure loss in the filtering section 34 of the filter member 31 is increased, so that the pressure loss in the filter 3 is increased. Therefore, it is necessary to regenerate the filter 3.

Therefore, in the first embodiment, the regeneration time of the filter 3 is determined according to the speed of the engine 1, the load and the signal sent from the exhaust gas temperature detector 15. In order to maintain an amount of exhaust gas supplied to the filter 3 constant, an amount of exhaust gas in each passage is controlled with the valve 8 through the vacuum regulating valve 7 and the motor 12 by the signal sent from CPU 5. At the same time, by detecting the signals of water temperature, engine revolution and accelerator aperture, CPU 5 supplies a current to the filter 3 through the heater relay 5.

According to the signal of CPU 5, by being supplied the current to the filtering section 34 through the holding section 36 of the filter member 31 which is pinched between the electrode members 13a and 13b, heating of the filtering sections 34 of a plurality of filters 31 provided to the assembled body 20, one of the 4 assembled bodies 20 divided by the bulkhead 11 of the filter 3, is carried out.

When the filtering section 34 is heated in the manner described above, particulates adhered onto the filtering section 34 are burnt so that the filtering section 34 can be regenerated, and the assembled body 20 to which the current has been supplied, can be regenerated.

Therefore, regeneration of the assembled body 20 is determined with the lapse of time, and the completion of regeneration is determined according to the signal sent form CPU 10. After that, in order to regenerate another assembled body 20, the control of the valve 8, the current to be supplied and the like are carried out by CPU 5.

For example, in the case where an amount of exhaust gas is corresponded to the idling condition, oxygen concentration of the exhaust gas is not less than 10%, and an amount of particulates collected by the entire filter is 25 g, the regeneration time of the filter 3 in the first embodiment is finished about 60 to 180 sec when electric power of 2 KW is supplied to one assembled body 20.

In the first embodiment, since the filter 3 which is made of an alloy of Fe-Cr-Al-REM is utilized, the electrical conductive condition of the filter member 31 can be maintained even when the surface is oxidized. Accordingly, the filter member 31 is excellent in anti-oxidization property, and when particulates are heated for the regeneration by supplying a current, the filtering section itself can be heated, so that the particulates adhered onto the filtering member 34 can be positively burnt.

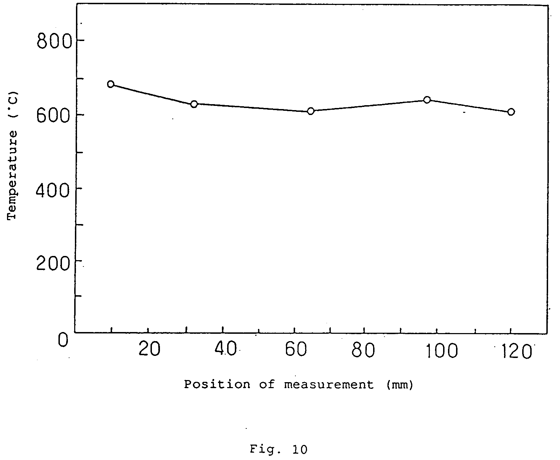

Fig. 10 is a characteristic diagram showing a radiating condition of the filter member of the first embodiment of the present invention. The result of the measurement shows the temperature of each portion of the filtering section 34 when a current of 35A was flown at a voltage of 6.2V in two filters, the length of which was 130 mm, the width was 13 mm, the thickness was 2.5 mm, and the wall thickness was 0.2 to 0.3 mm.

Since the dimensions of the mesh of the lath metal member are uniform and metallic powder is adhered uniformly onto the mesh, the entire filtering member 31 can be heated uniformly as shown in Fig. 10. Accordingly, heat can be easily transmitted to other filtering members 31, so that local heat concentration can be avoided, and damage of the filtering member 34 caused by heat can be prevented.

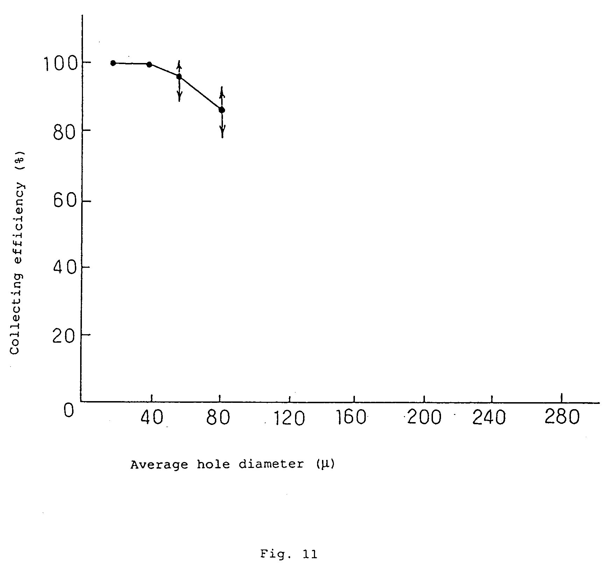

Fig. 11 shows the collecting efficiency with regard to an average size of holes formed in the three-dimensional mesh structure of the sintered metal 33. The collecting efficiency was measured under the following conditions: the engine speed, 2000 rpm; the load, 6 kgm; and the particulates included in the exhaust gas discharged from the diesel engine was measured by a smoke meter.

According to the experience, even when the average hole size is about 240 µm, the particulate collecting efficiency can be increased to not less than 30%, and an excellent collecting efficiency can be provided by utilizing the filter member 31 of the first embodiment. Further, by adopting the first embodiment, large particles can be collected by the meshes of the support section 32 of the filter member 31, and fine particles can be simultaneously collected by the sintered metal forming the second layer 33 having the three-dimensional mesh structure formed in the mesh portions. Therefore, large spaces can be formed for collecting particulates as compared with the volume of the filtering member 31, and pressure loss is lowered and excellent filter member can be obtained.

By adjusting the amount of slurry to be adhered onto the support section 32, the thickness of the sintered metal forming the second layer 33, which serves as a filtering section, can be easily adjusted in a range of 0.05 to 2.0 mm when necessary, so that a filter member satisfying a necessary condition can be easily obtained.

The fixing of the upstream-side end section of the filter member 31 to the upstream-side fixing section 46 is carried out by movably penetrating the lead portion 45b of the spacer 45 provided to the upstream-side end section between the filtering sections 34 through the hole portion 46a of the upstream-side end portion 46. Therefore, even if the filter member 31 is thermally expanded when the filtering section 34 is heated, the entire thermal expansion of the filter member 31 can be absorbed by moving of the spacer 45, so that the deflection caused by thermal expansion of the filter member 31 can be prevented.

Since the filtering section 34 of the filter member 31 is composed in such a manner that the sintered metal forming the second layer 33, the composition of which is the same as the support section 32, is provided onto the support section 32, the sintered metal forming the second layer 33 is hardly separated from the support section 32 even when the filtering section 34 is heated to high temperature. Accordingly, it can be made as the filtering member having good environmental durability.

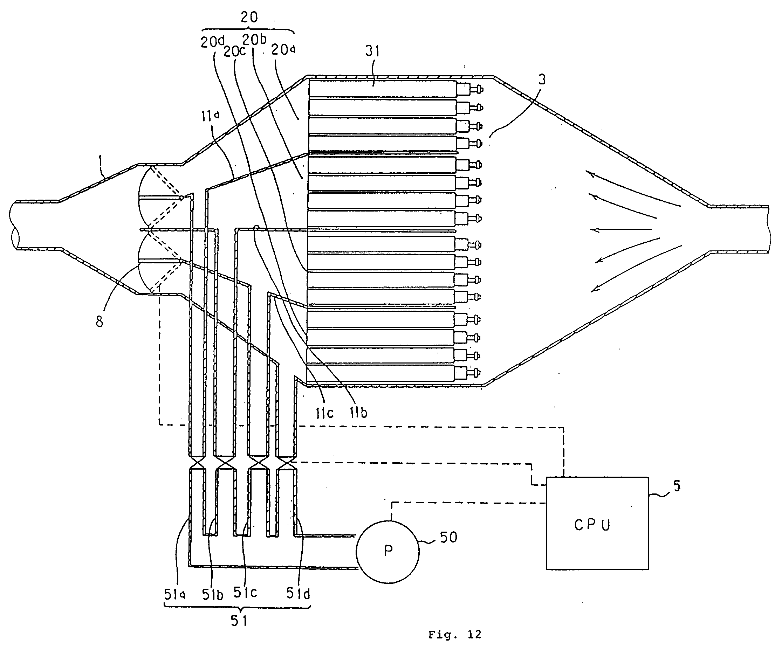

Fig. 12 is a view showing the structure of a diesel particulate filter system of the second embodiment in which the filter member 31 of the present invention is utilized. Like parts in the drawings are identified by the same reference character.

The structure of the filter 3 of the second embodiment is the same as that of the first embodiment, and only one different point is that an air pump 50 is provided to the apparatus of the second embodiment.

The structure of the second embodiment will be described in detail. On the downstream side of the filter 3, the filter 3 is divided into 4 portions by the divided passages 11a to 11c so that 4 assembled bodies 20 constitute the filter 3.

When the filter is regenerated, in order to supply a necessary amount of air for combustion from the downstream side of each assembled body 20, the air pump 50 is connected with each passage divided by the divided passages, through an air supply pipe 51. Between the air pump 50 and each passage, is provided a valve to adjust an amount of air to the air supply pipe 51. The other structures of the second embodiment are the same as that of the first embodiment.

For example, in the case where the assembled body 20a is regenerated, first, the valve 8 closes the downstream side of the assembled body 20a, and at the same time regeneration air is supplied from the air pump 50 through the air supply pipe 51a.

Concurrently, according to a signal sent from CPU5, a current is supplied to the filter member 31 constituting the assembled body 20a, so that the filter member 31 is heated and the assembled body 20a is regenerated.

After the regenerated gas is discharged from the upstream side of the assembled body 20a, it flows into the upstream side of the assembled body 20, the downstream side of which is not closed, through the valve 8 of the assembled body 20b and the like, the gas passes through the filter 3 and is discharged into the atmospheric air.

When the second embodiment is adopted, the air filter 3 can be regenerated with a constant amount of air by the number of revolution of the air pump 50 irrespective of the engine speed and load, so that the valve 2 can be easily controlled.

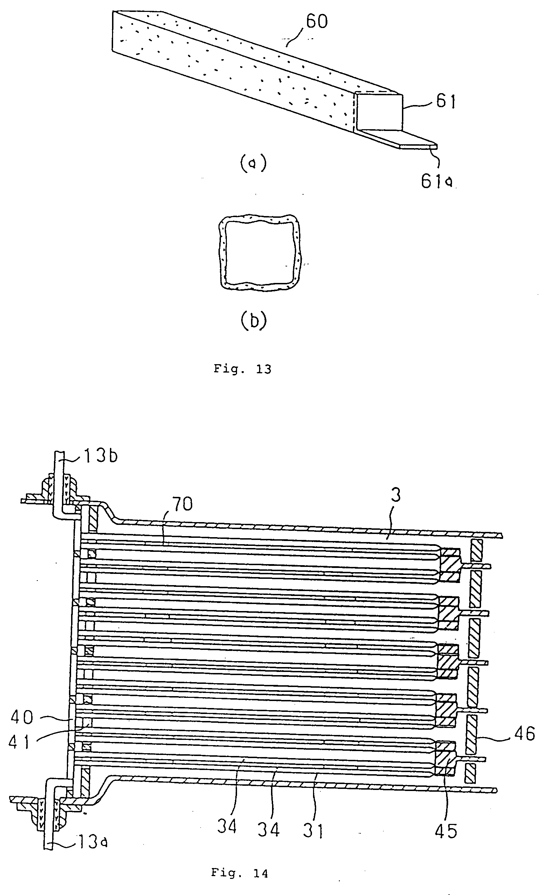

Fig. 13(a) is a schematic illustration of a filter member 60 of the third embodiment.

As shown in Fig. 13(b), this filter member 60 is formed like a square pole, the section of which is rectangular, which is different from the filter member 31 of the first embodiment.

The downstream side of this filter member 60 is covered with a holding member 61 made of an alloy of Fe-Cr-Al-REM, the Cr content of which is 18 to 24 wt%, the Al content is 10 wt%, REM is 0.2%, and the rest is Fe.

The holding member 61 is formed with a holding section 61a by which the holding member 61 can be fixed to the fixing member.

Next, a method for producing the filter member 60 will be described as follows.

First, a support section shown in Fig. 7 was formed to a shape like a square pole, and it is made as expanded metal of pipe shape in which one side of the rectangle was 5 to 20 mm long, and the length was 100 - 400 mm.

After that, an end face of this pipe-shaped support section was covered with the L-shaped holding member 61 by means of welding.

Meshes of thus obtained pipe-shaped support section were filled with slurry which is obtained by mixing 100 parts of an alloy comprised of Fe-Cr-Al which is the same as that of the first embodiment, 0.5 to 5 parts of an organic binder made of ethyl cellulose or vinyl acetate resin and the like, and 5 to 20 parts of carbon powder, the particle size of which was 20 to 200 µm.

After the slurry filled in the meshes had been dried, it was sintered at temperatures of 900 to 1200°C for 0.5 to 20 hours so that the filter member 60 was obtained.

In the same manner as the first embodiment, a plurality of thus obtained filter members 60 were fixed to the fixing member so that the filter 3 was formed. After that, collection of particulates and regeneration were carried out.

As a result, excellent collecting efficiency was provided in the same manner as the first embodiment, as well as the particulates collected with the entire filter member 60 were uniformly regenerated when a current was supplied to the filter member 60 and the filter member itself was heated.

The square pole shape can be easily produced.

The filter member of the present invention having excellent collecting and regenerating efficiencies can be produced not only by the method described in the aforementioned embodiment but also by the following methods.
(1) In the aforementioned embodiment, expanded metal members were utilized for forming the support section 32. However, metallic wires or a metal member having a rectangular cross section may be also utilized. Metallic wires or a metal member having a rectangular cross section can be made with any kind of a metal less susceptible to corrosion such as stainless steel, surface treated iron, aluminum, copper and nickel, and the like. By adopting this producing method using metal wires or metal member having rectangular cross section a metal appropriated for the environment for which the obtained filter is utilized, can be selected, so that a filter member having excellent characteristic can be easily obtained.
(2) In the aforementioned embodiment, an expanded metal member was utilized for forming the support section 32. However, a member made of a metallic plate or foil, on the surface of which circular, triangular, square or hexagonal holes are formed, may be utilized.

The present invention may be composed in the following manner.

In the aforementioned example, a current was supplied to each unit of the assembled bodies in the filter. However, for example, the current may be supplied only to one lateral line of filter members of an assembled body and the assembled body may be regenerated. According to the aforementioned arrangement, not all the filter members of the assembled body are supplied a current, so that electric power consumption can be lowered.

As shown in Fig. 14, by providing a spacer (45) between filtering sections (34) of a pair of opposed filter members (31) connected by a connecting section (35), the filter (3) can be reinforced and the distance between the filters can be maintained constant.

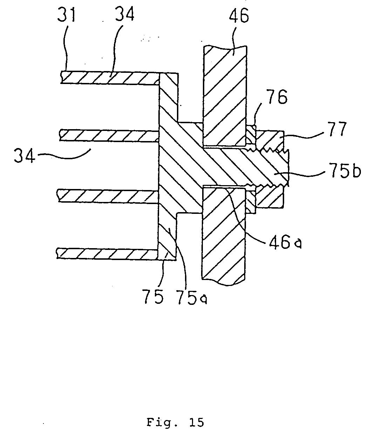

Fig. 15 is an enlarged sectional view of an upstream-side fixing section of a filter member of another embodiment.

In this case, a connecting section is abolished and a spacer 75 is formed integrally with a connecting spacing section 75a and a lead section 75b, so that the distance between the filtering sections 34 of the filter member 31 can be maintained constant, and at the same time, the filter member 31 can be fixed to an upstream-side fixing section 46.

That is, the connecting spacing section 75a is welded and fixed to the upstream-side end section of each filtering section 34, and the lead section 75b movably penetrates through a hole portion 46a of the upstream-side fixing section 46. Further, the lead section 75b and the upstream-side fixing section 46 positively hold the spacer section 74 at the upstream-side fixing section 46 with a screw portion 77 through a buffer member 76.

According to the structure described above, heat expansion of the filtering section 34 is absorbed by the buffer member 76.

In this case, the time to regenerate a filter is not limited to the aforementioned embodiment. It may be determined by a relationship between either accumulated amount of engine revolutions or travel distance, and a battery charging condition.

In the aforementioned embodiment, the filter is composed of 320 filter members, however, the number of filter members used for one filter is not limited to the specific embodiment.

Electric power supply means to supply electric power to the filter members is not limited to the aforementioned embodiment. Any electric power supply means can be adopted.

In the aforementioned embodiment, the filtration of exhaust gas is carried out by the flow from the outside of a filter to the hollow portion. However, the filtration may be carried out by flowing the gas from the hollow portion to the outside.

In the aforementioned embodiment, the filter member of the present invention was used for the particulate collecting filter of diesel engines. However, the filter member of the present invention is not limited to the specific use. The filter member may be used for the uses required both collecting function, and heating.

For example, the filter member of the present invention may be used as the filter which has both functions of collecting particulates in engine lubricating oil of an internal combustion engines and heating of the oil.

### POSSIBILITY OF INDUSTRIAL APPLICABILITY

As explained above, the self-exothermic type filter of the present invention is used, for example, for removing particulates, which are impurities discharged from diesel engines, at high collecting efficiency.

## Claims

1. A filter (3) heated by applying electricity for regenerating, said filter (3) comprising:
a support section (32) formed from an electrically conductive metal member having a mesh portion, said mesh portion having a plurality of holes equally distributed thereon and having a constant thickness so that electrical conductivity remains constant; and a second layer (33) covering said support section and being integral with said support section (32), being made from a porous sintered body obtained from metallic powder having the same composition as said support section (32) so that said second layer (33) and said support section (32) generate heat by themselves when electricity is applied to said support section (32) and said second layer (33).

2. A filter according to claim 1, wherein said support section (32) is comprised of iron, chromium, aluminium and rare earth metal and wherein said second layer (33) is made from metallic powder composed of iron , chromium, aluminium and rare earth metal.

3. A filter according to claim 1 or 2, wherein said support section (32) is a sintered alloy and contains not less than 5 wt% of aluminium.

4. A filter system comprising:
a housing having an inlet end and an outlet end;
a filter (3) according to any of the claims 1 to 3, a source of electrical power (14) for said support section (32) so that when particulates are collected on a surface of said filter (3), said support section (32) is heated by supplying electricity and said second layer (33) is also heated together with said support section (32) so that particulates on said surface are incinerated by heat generated by said second layer (33).

5. A filter system according to claim 4, wherein said support section (32) is an expanded metal member having a plurality of rhomboid meshes formed of a metal member having a rectangular cross section being 0.05 to 0.5 mm in thickness (t), said rhomboid meshes being 0.5 to 1.5 mm in longitudinal length (SW) and 1.0 to 5.0 mm in lateral length (LW) of said mesh and 0.08 to 0.7 mm in thickness (W) of said metal member having a rectangular cross section.

6. Use of the filter system according to claim 4 or 5 for the filtration of particles in an exhaust gas filtering system.

## Patentansprüche

1. Filter (3), erwärmt durch Anlegen von Elektrizität zur Regeneration, wobei der Filter (3) umfaßt:
einen Stütz-Abschnitt (32), der gebildet ist aus einem elektrisch leitfähigen Metall-Glied, das einen Maschen-Teil hat, wobei der Maschen-Teil eine Mehrzahl an gleichmäßig darauf verteilten Löchern hat und eine konstante Dicke hat, so daß die elektrische Leitfähigkeit konstant bleibt; und eine zweite Schicht (33), die den Stütz-Abschnitt (32) bedeckt und mit dem Stütz-Abschnitt ein Ganzes bildet, die aus einem porösen gesintertem Körper hergestellt ist, der von metallischem Pulver erhalten wurde, das die gleiche Zusammensetzung wie der Stütz-Abschnitt (32) hat, so daß die zweite Schicht (33) und der Stütz-Abschnitt (32) von selbst Hitze erzeugen, wenn Elektrizität an den Stütz-Abschnitt (32) und die zweite Schicht (33) angelegt wird.

2. Filter nach Anspruch 1, worin der Stütz-Abschnitt (32) aus Eisen, Chrom, Aluminium und Metall seltener Erden (REM) besteht und worin die zweite Schicht (33) aus metallischem Pulver hergestellt ist, das sich aus Eisen, Chrom, Aluminium und Metall seltener Erden zusammensetzt.

3. Filter nach Anspruch 1 oder 2, worin der Stütz-Abschnitt (32) eine gesinterte Legierung ist und nicht weniger als 5 Gewichts-% an Aluminium enthält.

4. Filter-System, das umfaßt:
ein Gehäuse, das ein Einlaß- und ein Auslaß-Ende hat;
einen Filter (3) nach irgendeinem der Ansprüche 1 bis 3, eine Quelle elektrischer Leistung (14) für den Stütz-Abschnitt (32), so daß dann, wenn Partikel an einer Oberfläche von dem Filter (3) gesammelt werden, der Stütz-Abschnitt (32) durch Anlegen von Elektrizität erwärmt wird und die zweite Schicht (33) auch zusammen mit dem Stütz-Abschnitt (32) erwärmt wird, so daß Partikel an der Oberfläche von Hitze, die von der zweiten Schicht (33) erzeugt wird, zu Asche verbrannt werden.

5. Filter-System nach Anspruch 4, worin der Stütz-Abschnitt (32) ein gedehntes Metall-Glied ist, das eine Vielzahl an rautenförmigen Maschen hat, die aus einem Metall-Glied gebildet sind, das einen rechteckigen Querschnitt hat, der von 0.05 mm bis 0.5 mm in Dicke (t) ist, wobei die rautenförmige Maschen von 0.5 bis 1.5 mm in Längs-Erstreckung (SW) und 1.0 bis 5.0 mm in Quer-Erstreckung (LW) von der Masche sind und 0.08 bis 0.7 mm in Dicke (W) von dem Metall-Glied, das einen rechteckigen Querschnitt besitzt.

6. Verwendung des Filter-Systems nach Anspruch 4 oder 5 zur Filterung von Partikeln in einem Auspuff-Gas-Filterungs-System.

## Revendications

1. Un filtre (3) chauffé en appliquant de l'électricité pour la régénération, ledit filtre (3) comprenant: une section de support (32) formée à partir d'un élément en métal conducteur de l'électricité ayant une partie en treillis, ladite partie en treillis ayant une pluralité de trous répartis de façon égale sur celle-ci et ayant une épaisseur constante si bien que la conductivité électrique reste constante et une deuxième couche (33) recouvrant ladite section de support et solidaire de ladite section de support (32) réalisée à partir d'un corps fritté poreux obtenu à partir d'une poudre métallique ayant la même composition que ladite section de support (32) si bien que ladite deuxième couche (33) et ladite section de support (32) génèrent de la chaleur en elles-mêmes lorsque de l'électricité est appliquée à ladite section de support (32) et à ladite deuxième couche (33).

2. Un filtre selon la revendication 1, dans lequel ladite section de support (32) est constituée de fer, de chrome, d'aluminium et d'un métal de terres rares et dans lequel ladite deuxième couche (33) est réalisée à partir d'une poudre métallique constituée de fer, de chrome, d'aluminium et d'un métal de terres rares.

3. Un filtre selon la revendication 1 ou 2, dans lequel ladite section de support (32) est un alliage fritté et ne contient pas moins de 5% en poids d'aluminium.

4. Un système de filtre comprenant: un boîtier ayant une extrémité d'entrée et une extrémité de sortie; un filtre (3) selon l'une quelconque des revendications 1 à 3, une source d'énergie électrique (14) pour ladite section de support (32) si bien que lorsque des particules sont recueillies sur une surface dudit filtre (3), ladite section de support (32) est chauffée en alimentant de l'électricité et ladite deuxième couche (33) est également chauffée conjointement avec ladite section de support (32) si bien que les particules sur ladite surface sont incinérées par la chaleur générée par ladite deuxième couche (33).

5. Un système de filtre selon la revendication 4, dans lequel ladite section de support (32) est un élément en métal déployé ayant une pluralité de mailles en forme de losange formées d'un élément en métal ayant une section transversale rectangulaire d'une épaisseur (t) de de 0,05 à 0,5 mm, lesdites mailles en forme de losange ayant une longueur longitudinale (SW) de 0,5 à 1,5 mm, une longueur latérale (LW) de 1,0 à 5,0 mm dudit treillis et une épaisseur (W) de 0,08 à 0,7 mm dudit élément en métal ayant une section transversale rectangulaire.

6. L'utilisation du système de filtre selon la revendication 4 ou 5, pour la filtration de particules dans un système de filtration de gaz d'échappement.
